# EUROPÄISCHE PATENTSCHRIFT

(11) **EP 2 569 782 B1**
(45) Veröffentlichungstag und Bekanntmachung des Hinweises auf die Patenterteilung: **10.12.2014**
(21) Anmeldenummer: 11706752.0
(22) Anmeldetag: 23.02.2011
(51) Int. Cl.: H02H 7/055, H01F 29/04, H01H 9/00

(54) **LASTSTUFENSCHALTER**
ON-LOAD TAP CHANGER
COMMUTATEUR DE CHARGE À GRADINS

(30) Priorität: 08.05.2010 DE 102010019949
(43) Veröffentlichungstag der Anmeldung: 20.03.2013
(73) Patentinhaber: Maschinenfabrik Reinhausen GmbH, 93059 Regensburg (DE)
(72) Erfinder: DOHNAL, Dieter, 93138 Lappersdorf (DE)
(86) Internationale Anmeldenummer: PCT/EP2011/000852
(87) Internationale Veröffentlichungsnummer: WO 2011/141076

(56) Entgegenhaltungen:
- DE-A1- 2 125 471
- DE-A1- 2 255 830
- DE-A1-102007 004 530
- DE-C1- 10 102 310

## Beschreibung

Die Erfindung betrifft einen Laststufenschalter zur unterbrechungslosen Umschaltung zwischen Wicklungsanzapfungen eines Stufentransformators.

Laststufenschalter sind seit vielen Jahren bekannt; nachdem sie früher mechanische Kontakte zur Lastumschaltung aufwiesen, die unter Öl arbeiten, besitzen zahlreiche neuere Geräte Vakuumschaltröhren.

Die Verwendung von Vakuumschaltröhren zur Lastumschaltung verhindert eine Lichtbogenbildung im Öl und damit die Ölverschmutzung des Lastumschalteröles. Sie gestattet damit verlängerte Wartungsintervalle.

Laststufenschalter mit Vakuumschaltröhren sind mit zahlreichen unterschiedlichen Schaltungen mit 2, 3,4 oder auch mehr schaltenden Vakuumschaltröhren pro Phase bekannt.

Eine typische Schaltung, hier mit 3 Vakuumschaltröhren pro Phase, zeigt die DE 10 2007 004 530 A1.

Bei verschiedenen Anwendungsfällen solcher bekannter Laststufenschalter mit Vakuumschaltröhren zur Regelung von Leistungstransformatoren ist jedoch eine hohe Stoßspannungsfestigkeit, bis zu 100 kV und deutlich darüber hinaus, erforderlich.

Solche unerwünschten Stoßspannungen, deren Höhe wesentlich durch den Aufbau des Stufentransformators und der Wicklungsteile zwischen den einzelnen Anzapfstufen bedingt ist, sind zum einen Blitzstoßspannungen, die sich durch das Einschlagen von Blitzen im Netz ergeben.

Zum anderen können auch Schaltstoßspannungen auftreten, die durch nicht vorhersehbare Schaltstöße im zu regelnden Netz verursacht sind.

Bei nicht ausreichender Stoßspannungsfestigkeit des Laststufenschalters kann es zu kurzzeitigem Stufenkurzschluss bzw. unerwünschtem Durchschlag an der Keramik bzw. dem Dampfschirm von Vakuumschaltröhren im nicht den Laststrom führenden Lastzweig kommen, was nicht nur deren Langzeitschädigung verursachen kann, sondern generell unerwünscht ist.

Dies führt in vielen Fällen bei der Auslegung der Schaltstrecken und damit insbesondere auch der Vakuumschaltröhren zur Überdimensionierung, damit diese mit Sicherheit der beschriebenen Spannungsbeanspruchung standhalten. Sowohl der heute bei modernen Geräten zur Verfügung stehende geringe Bauraum, als auch die Wirtschaftlichkeit sowie Verfügbarkeit solcher Vakuumschaltröhren lassen eine solche Überdimensionierung nachteilig erscheinen.

Aus der DE 2357209 A und der DE 2604334 ist es bereits bekannt, zur Bekämpfung zu hoher Stoßspannungsbeanspruchungen zwischen den Lastzweigen Schutzfunkenstrecken oder spannungsabhängige Widerstände oder beides vorzusehen; diese Mittel sind jedoch in verschiedenen Fällen unzureichend und können schädliche Stoßspannungsbeanspruchungen in ihrer Wirkung nicht oder nicht vollständig ausschließen.

Aufgabe der Erfindung ist es daher, eine solche Überdimensionierung der Vakuumschaltröhren zu vermeiden und dennoch bei einem erfindungsgemäßen Laststufenschalter die notwendige Spannungsfestigkeit sicherzustellen.

Diese Aufgabe wird durch einen Laststufenschalter mit den Merkmalen des ersten Patentanspruches gelöst. Die Unteransprüche betreffen vorteilhafte Weiterbildungen der Erfindung.

Die allgemeine erfinderische Idee besteht in einer Verlagerung der beschriebenen Spannungsbeanspruchung von den Vakuumschaltröhren zu in Reihe dazu angeordneten Kontaktanordnungen. Nach dem erfolgreichen Abschalten bzw. Umschalten - schaltungsabhängig - mit den Vakuumschaltröhren sorgen die erfindungsgemäßen zusätzlichen Kontaktanordnungen im Anschluss daran stromlos schaltend für eine vollständige Potentialtrennung. Vor der nächsten Lastumschaltung, d. h. vor dem Einschalten der Vakuumschaltröhren, wird in umgekehrter Reihenfolge zunächst durch die erfindungsgemäßen Kontaktanordnungen das Potential wieder angelenkt.

Die erfindungsgemäßen Kontaktanordnungen können als mechanische Kontakte direkt im Isolieröl ausgeführt sein, sie können auch als weitere Vakuumschaltröhre oder in Halbleiter-Technologie realisiert werden.

Die Erfindung wird nachfolgend an Hand von Ausführungsbeispielen näher erläutert. Es zeigen
- Figur 1: die Schaltung eines ersten erfindungsgemäßen Laststufenschalters
- Figur 2: dessen Schaltablauf
- Figur 3: die Schaltung eines weiteren erfindungsgemäßen Laststufenschalters.

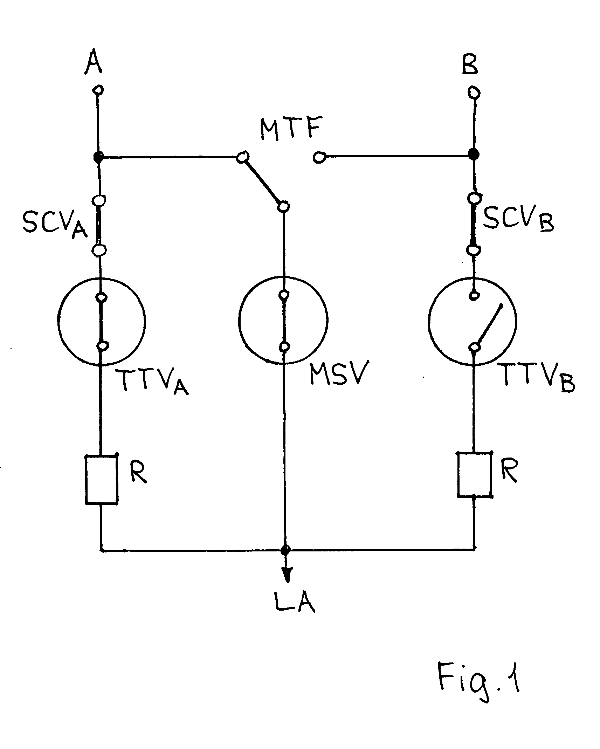

In Figur 1 ist ein Laststufenschalter gezeigt, dessen Lastumschalter zwischen zwei Wicklungsanzapfungen A, B unterbrechungslos umschaltet. In der Mitte ist der elektrische Pfad dargestellt, der im stationären Betrieb den Laststrom führt. Er weist eine erste Vakuumschaltzelle MSV auf und in Reihe dazu einen mechanischen Kontakt MTF, der schalterabhängig jede der beiden Wicklungsanzapfungen A oder B mit der ersten Vakuumschaltzelle MSV verbinden kann.

Links und rechts davon sind die beiden Hilfsstrompfade gezeigt, die die unterbrechungslose Umschaltung des Laststromes bewirken; sie sind bei der Lastumschaltung kurzfristig zwischen den Anzapfungen und der Lastableitung LA einschaltbar und führen kurzzeitig den Kreisstrom. Sie bestehen jeweils aus einer weiteren Vakuumschaltröhre TTV_{A} bzw. TTV_{B} und in Reihe dazu einem Überschaltwiderstand R.

Erfindungsgemäß ist zwischen den beschaltbaren Anzapfungen A, B und den Vakuumschaltröhren TTV_{A}, TTV_{B} in den Hilfsstrompfaden in Serie zu ihnen jeweils ein Kontakt SCV_{A} bzw. SCV_{B} geschaltet, der im stationären Betrieb als stromlos schaltender Hilfskontakt die Vakuumschaltröhren TTV_{A} bzw. TTV_{B} vollständig galvanisch trennt und eine Potentialtrennung realisiert.

Damit ist auf einfache aber wirkungsvolle Weise ein sicherer Schutz dieser Vakuumschaltröhren vor Überspannungen, z. B. Stoßspannungen, gewährleistet.

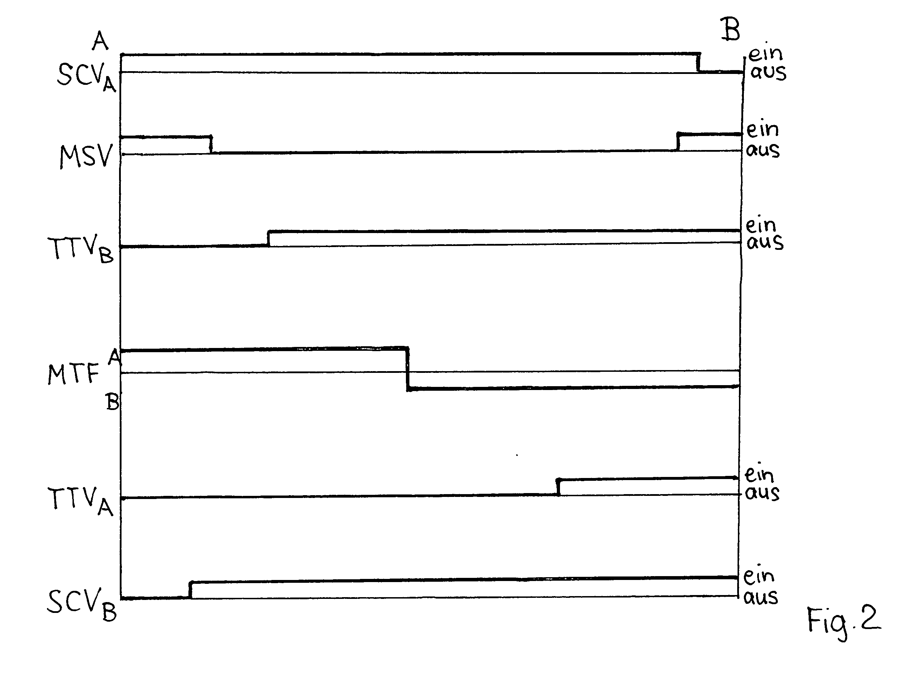

Figur 2 zeigt die Betätigungssequenz dieses erfindungsgemäßen Lastumschalters. Es ist zu sehen, dass die erfindungsgemäßen Kontakte SCV_{A} bzw. SCV_{B} vor Beginn der eigentlichen Umschaltung die notwendige galvanische Verwendung der Vakuumschaltröhren TTV_{A} bzw. TTV_{B} im jeweils stromführenden Hilfszweig herstellen und nach dem Abschluss der Umschaltung das Potential am dann anderen Hilfszweig wieder trennen.

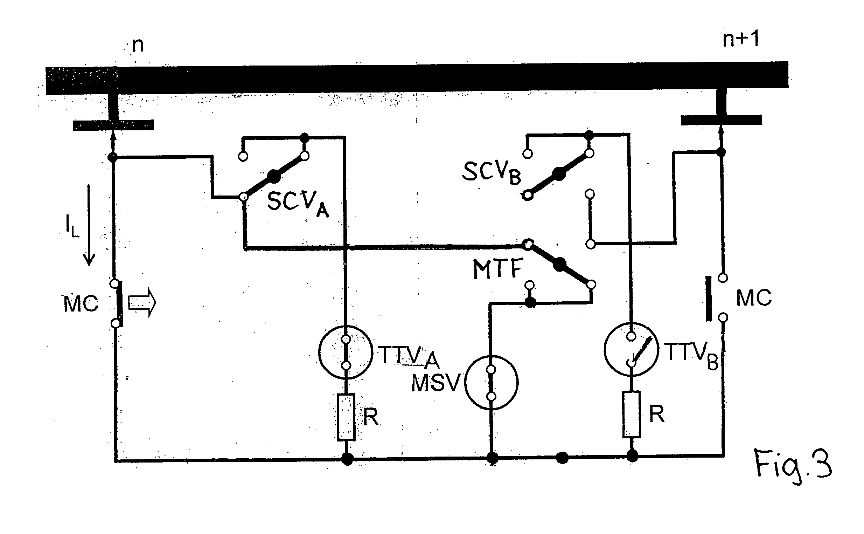

Figur 3 zeigt eine modifizierte Ausführungsform eines erfindungsgemäßen Lastumschalters eines Laststufenschalters. Hierbei sind die erfindungsgemäßen mechanischen Kontakte SCV_{A} und SCV_{B} nicht als Einzelkontakte, sondern als Wechsler ausgebildet. Eine solche Ausführung ermöglicht eine vorteilhafte Betätigung dieser Kontakte, an ihrer Funktion und Wirkung ändert sich nichts.

Festzuhalten ist, dass die Funktion der erfindungsgemäß in Reihe zu jeder Vakuumschaltröhre in einem Hilfsstromkreis vorgesehenen Kontakte, in den Ausführungsbeispielen mit SCV_{A} bzw. SCV_{B} bezeichnet, nicht an eine bestimmte Schaltung oder Anzahl von Vakuumschaltröhren gebunden ist. Im Rahmen der Erfindung sind zahlreiche andere Schaltungen möglich und sinnvoll.

## Patentansprüche

1. Laststufenschalter zur unterbrechungslosen Umschaltung zwischen Wicklungsanzapfungen (A, B) eines Stufentransformators,
aufweisend einen Wähler zur leistungslosen Vorwahl der neuen Wicklungsanzapfung (A, B), auf die umgeschaltet werden soll,
sowie einen Lastumschalter zur eigentlichen unterbrechungslosen Lastumschaltung,
wobei der Lastumschalter mindestens einen Hauptstromzweig besitzt, der im stationären Betrieb den Laststrom von der beschalteten Wicklungsanzapfung (A, B) über mindestens eine Vakuumschaltröhre (MSV) zu einer Lastableitung (LA) führt
und wobei der Lastumschalter weiterhin mindestens zwei Hilfsstromzweige besitzt, die jeweils aus einer Reihenschaltung aus einer weiteren Vakuumschaltröhre (TTV_{A}, TTV_{B}) und mindestens einem Überschaltwiderstand (R) bestehen und zwischen jeweils einer der Wicklungsanzapfungen (A, B) und der Lastableitung (LA) angeordnet sind,
**dadurch gekennzeichnet,**
**dass** außer Kontakten des Wählers in jedem der mindestens zwei Hilfsstromzweige im Lastumschalter zwischen der jeweiligen Wicklungsanzapfung (A, B) und der jeweiligen weiteren Vakuumschaltröhre (TTV_{A}, TTV_{B}) ein zusätzlicher, separat betätigbarer Kontakt (SCV_{A}, SCV_{B}) in Reihe angeordnet ist.

2. Laststufenschalter nach Anspruch 1,
**dadurch gekennzeichnet,**
**dass** die weiteren Kontakte (SCV_{A}, SCV_{B}) als mechanische Kontakte unter Öl ausgebildet sind.

3. Laststufenschalter nach Anspruch 1 oder 2,
**dadurch gekennzeichnet,**
**dass** die weiteren Kontakte (SCV_{A}, SCV_{B}) als Wechsler ausgebildet sind.

4. Laststufenschalter nach Anspruch 1,
**dadurch gekennzeichnet,**
**dass** die weiteren Kontakte (SCV_{A}, SCV_{B}) als weitere Vakuumschaltröhren ausgebildet sind.

5. Laststufenschalter nach Anspruch 1,
**dadurch gekennzeichnet,**
**dass** die weiteren Kontakte (SCV_{A}, SCV_{B}) als Halbleiterschaltanordnung bzw. Halbleiterschaltanordnungen ausgebildet sind.

## Claims

1. On-load tap changer for interrupted switching over between winding taps of a tapped transformer, comprising
a selector for power-free preselection of the new winding tap, which is to be switched over to, and
a load changeover switch for the actual uninterrupted load changeover,
wherein the load changeover switch has at least one main current branch which in stationary operation conducts the load current from the connecting winding tap to a load shunt by way of at least one vacuum switching tube and
wherein the load changeover switch additionally has at least two auxiliary current branches, which each consist of a series connection of a further vacuum switching tube and at least one switch-over resistance and which are each arranged between a respective one of the winding taps and the load shunt,
**characterised in that** apart from the contacts of the selector an additional, separately actuable contact (SCV_{A}, SCV_{B}) is arranged in series in each of the at least two auxiliary current branches in the load changeover switch between the respective winding tap (A, B) and the respective further vacuum switching tube (TTV_{A}, TTV_{B}).

2. On-load tap changer according to claim 1, **characterised in that** the further contacts (SCV_{A}, SCV_{B}) are constructed as mechanical contacts under oil.

3. On-load tap changer according to claim 1 or 2, **characterised in that** the further contacts (SCV_{A}, SCV_{B}) are constructed as changeover contacts.

4. On-load tap changer according to claim 1, **characterised in that** the further contacts (SCV_{A}, SCV_{B}) are constructed as further vacuum switching tubes.

5. On-load tap changer according to claim 1, **characterised in that** the further contacts (SCV_{A}, SCV_{B}) are constructed as a semiconductor switching arrangement or as semiconductor switching arrangements.

## Revendications

1. Commutateur de charge à gradins pour permettre d'effectuer une commutation sans interruption entre deux prises de réglage d'enroulement (A, B) d'un transformateur à gradins,
comprenant un sélecteur pour permettre une présélection sans puissance de la nouvelle prise de réglage d'enroulement (A, B) sur laquelle doit être effectuée la commutation,
ainsi qu'un commutateur de charge pour permettre d'effectuer la commutation de charge sans interruption proprement dite,
le commutateur de charge comprenant au moins une branche de courant principale qui, à l'état stationnaire transfère le courant de charge de la prise de réglage d'enroulement (A, B) branchée par l'intermédiaire d'au moins un tube interrupteur à vide (MSV) à une dérivation de charge (LA), et
le commutateur de charge comprenant en outre au moins deux branches de courant auxiliaires qui sont respectivement constituées par le montage en série d'un autre tube interrupteur à vide (TTV_{A}, TTV_{B}) et d'au moins une résistance de passage (R) et sont montées entre une prise de réglage d'enroulement (A, B) respective et la dérivation de charge (LA),
**caractérisé en ce que**
outre des contacts du sélecteur, un contact supplémentaire (SCV_{A}, SCV_{B}) pouvant être actionné séparément est monté en série, dans chacune des deux branches de courant auxiliaires, dans le commutateur de charge, entre la prise de réglage d'enroulement (A, B) respective et l'autre tube interrupteur à vide respectif (TTV_{A}, TTV_{b}).

2. Commutateur de charge à gradins conforme à la revendication 1,
**caractérisé en ce que**
les autres contacts (SCV_{A}, SCV_{B}) sont réalisés sous la forme de contacts mécaniques sous huile.

3. Commutateur de charge à gradins conforme à la revendication 1 ou 2,
**caractérisé en ce que**
les autres contacts (SCV_{A}, SCV_{B}) sont réalisés sous la forme d'inverseurs.

4. Commutateur de charge à gradins conforme à la revendication 1,
**caractérisé en ce que**
les autres contacts (SCV_{A}, SCV_{B}) sont réalisés sous la forme d'autres tubes interrupteurs à vide.

5. Commutateur de charge à gradins conforme à la revendication 1,
**caractérisé en ce que**
les autres contacts (SCV_{A}, SCV_{B}) sont réalisés sous la forme d'un dispositif de commutation à semi-conducteur ou de dispositifs de commutation à semi-conducteur.
